# EUROPEAN PATENT SPECIFICATION

(11) **EP 1 417 897 B1**
(45) Date of publication and mention of the grant of the patent: **02.04.2008**
(21) Application number: 02769846.3
(22) Date of filing: 13.09.2002
(51) Int. Cl.: A23L 1/333, A23L 1/318, A23L 1/325

(54) **THE PROCESS FOR PURE AQUATIC SAUSAGE CONTAINING FISH**
VERFAHREN ZUR HERSTELLUNG VON REIN AQUATISCHER WURST, FISCH ENTHALTEND
PROCEDE DE FABRICATION DE SAUCISSE AQUATIQUE PURE CONTENANT DU POISSON

(30) Priority: 14.08.2002 CN 02128809
(43) Date of publication of application: 12.05.2004
(73) Proprietor: Wang, Shan, Haidan District, Beijing 100036 (CN)
(72) Inventor: Wang, Shan, Haidan District, Beijing 100036 (CN)
(74) Representative: Leszczynski, André
(86) International application number: PCT/CN2002/000653
(87) International publication number: WO 2004/016115

(56) References cited:
- CN-A- 1 235 788
- CN-A- 1 298 667
- CN-A- 86 101 290
- SAFFLE R.: "The use of squid in meat emulsions" JOURNAL OF FOOD SCIENCE, vol. 38, no. 3, 1973, pages 551-552, XP008031103
- PATENT ABSTRACTS OF JAPAN vol. 007, no. 281 (C-200), 15 December 1983 (1983-12-15) -& JP 58 162266 A (HAYASHIKANE SANGYO KK), 26 September 1983 (1983-09-26)
- PATENT ABSTRACTS OF JAPAN vol. 1997, no. 10, 31 October 1997 (1997-10-31) -& JP 09 168375 A (SAITO TADASHI), 30 June 1997 (1997-06-30)
- PATENT ABSTRACTS OF JAPAN vol. 017, no. 638 (C-1133), 26 November 1993 (1993-11-26) -& JP 05 199852 A (IWAO TAKAMURA), 10 August 1993 (1993-08-10)

## Description

### Field of the invention

The present invention relates to processing aquatic product, more particularly to a pure aquatic animal meat sausage with fish and its preparing method.

### Background of the invention

Aquatic animal meat has high nutritive value and delicate flavor, and people like eating it. Recently, it becomes gradually a fashion to eat more aquatic products and less animal and poultry meat. The conventional processing methods for aquatic products include curing, smoking, tinning etc, or transporting the refrigerated aquatic products to meet the needs of the people who live in the place no aquatic product there. Recently, the technology for preparing sausage with aquatic animal meat is developed greatly, which meets people's needs to some extent. But in the prior art, the sausage is prepared by mixing the starch and animal and poultry meat with hashed or mashed aquatic animal meat, then preparing the aquatic animal meat sausage by the conventional process of preparing sausage. There exists defects of no distinct flavour of aquatic animal meat, dryness and acerbity in taste, bad elasticity and single taste, so people can not feel that there exists aquatic animal meat in the sausage when they eat the sausage made by the conventional method. In the meantime, the sausage contains more fat and cholesterol which results from the adding of some animal and poultry meat.

Fish sausages in which pure aquatic animal meat is included, are disclosed for instance in SAFFLE R., "The use of squid in meat emulsions", JOURNAL OF FOOD SCIENCE, vol. 38, no. 3, 1973, pages 551-552; JP 58 162266 A (HAYASHIKANE SANGYO KK), and JP 09 168375 A. The fish sausages disclosed in these three documents contain cephalopod aquatic animal meat, such as squid, octopus, and cuttlefish. However, in these sausages the fish is in the form of a paste and thus the fish is invisible in the transverse section of the sausage. Furthermore no distinct flavour of fish can be tasted.

### Summary of the invention

The features of the fish sausage according to the invention are disclosed in claim 1. Additional features are disclosed in the sub-claims.

One object of the invention is to make use of the high binding ability of the cephalopod aquatic animal meat, to overcome the defects of the aquatic animal meat being shaped difficultly which results from its more moisture content and short fibres. The invention utilizes cephalopod aquatic animal meat instead of animal and poultry meat in the sausage in which fish meat used as raw material. The invention combines the aquatic product process with conventional meat process. The sausage with scientific formulation of the invention is prepared by the unique process. The present invention prepares a kind of tasteful and nutritive pure aquatic animal meat sausage with fish, which gets rid of the conventional method in preparing aquatic animal meat sausage by adding animal and poultry meat as binding agent. Furthermore, the invention can be used in large scale, and the sources of raw materials used in the invention are broad. The invention provides a new method for processing aquatic product.

Another object of the invention is to keep the original nutrition and flavor of aquatic in the sausage to maximum extent by using aquatic animal meat with a certain shape as raw material and steaming or cooking at low temperature, so that the sausage of the present invention is more delicious and better in taste than the aquatic animal meat sausage prepared by the fish meat mash and animal and poultry meat. Thus the aquatic animal meat sausage of the present invention will be a kind of true and tasteful aquatic animal meat sausage with fish and people can appreciate the existence of the aquatic animal meat.

To achieve the aforesaid purposes, the technical solutions of this invention are as follows:

The technical solution of the pure aquatic animal meat sausage with fish is as follows: selecting minced cephalopod aquatic animal meat as binding agent, mixing it with fish meat, the mixture is used as main material, and adding seasonings as subsidiary materials into the mixture, and then preparing pure aquatic animal meat sausage containing fish by conventional methods, wherein the cephalopod aquatic animal meat is 8-95% of the total weight, preferably 25-60%, more preferably 30-50%, of the total weight.

The cephalopod aquatic animals includes Todarodes pacificus, Sepia esculenta, Loligo japonica, Sepiella maindroni, Doryteuthis bleekeri, Sepioteuthis lessoniana, Octopus variabilis, Octopus ochellatus and Octopus vulgaris.

The processing method of cephalopod aquatic animal meat described above includes steps: selecting a certain amount of cephalopod aquatic animal meat to be rough processed, removing inedible portion, then cutting edible portion into block, strip, slice with length of 2-100mm, width of 2-100mm and thickness of 2-40mm; then curing them with suitable amount of seasonings for 2-48 hours; the said seasonings used in curing process include soya sauce, spicery, ground spices, paprika powder, etc.

The preparing method for the aforesaid pure aquatic animal meat sausage with fish includes steps: mixing the processed cephalopod aquatic animal meat with fish meat, and adding subsidiary materials according to different tastes by conventional technology. The weight ratios of the subsidiary materials are: soya sauce 0-8, refined salt 0.5-5, sugar 1-10, soya protein or starch 0-8, carrageenan 1-5, spicery 0.01-5, thickener 0.01-5. Mixing the above raw materials uniformly and filling the mixture into animal casing or simulation casing, and then steaming, cooking, smoking, or roasting adequately at low-temperature to obtain the sausages respectively.

Aforesaid fish meat can be fish block. The method for preparing fish block include steps: selecting a certain amount of fish to be rough processed, removing head, gut and scale of the fish, then salting the fish with suitable amount of salt or curing the fish with suitable amount of seasonings, drying the salted or cured fish by airing in shady and cool place for 24hr or by heating, steaming the dried fish for 15-30 minutes, removing fish bone and foreign materials after cooling, and then cutting the fish into block, strip or slice with length of 2-100mm, width of 2-100mm, and thickness of 2-40mm.

The fish block can also be processed by steps as follows: curing the fish with water, salt and spicery for 0.5 -12 hours, steaming or cooking and then removing inedible portion, cutting edible portion into block, strip or slice with length of 2-100mm, thickness of 2-40mm, and width of 2-100mm.

The fish block can be raw, ready-cooked, smoked and /or dried, and its shape is in the form of a block, strip or slice; its size is 2-100mm in length, 2-40 mm in thickness and 2-100mm in width.

The advantages of the present invention include: remaining the original flavor and nutrition of the aquatic animal meat to maximum extent, being better in taste and having more nutrition than conventional aquatic animal meat sausage using fish meat mash and animal and poultry meat as raw material. The aquatic animal meat sausage of the invention is not only tasteful but also can be appreciated the existence of the aquatic animal meat. It is the true aquatic meat sausage, which fills the vacancy of the market.

The present invention overcomes the defect of aquatic animal meat being shaped difficultly which results from its short fibres and more moisture content. The present invention can be used in large scale, and the sources of the raw material used in the invention are broad. The invention provides a new method for processing aquatic product.

The present invention combines the advantages of good taste and high nutritive value the aquatic animal meat possessed with the advantages of easy to preserve and carry, convenience for eating and unique in taste the conventional sausage possessed to provide a kind of new convenience food. Furthermore, the present invention can provide different tastes which result from different formulations, so it can satisfy different demands of consumers. Meanwhile, the present invention can solve the problem that some consumers are not expert in cooking who like eating aquatic animal meat.

### Detailed description of the preferring embodiments

The present invention now will be further explained by the following examples.

### Example 1

Selecting processed hairtail meat 60kg and Todarodes pacificus (squid) 40kg, cutting into block having length of 2-100mm, adding salt 2.7kg, sugar 2kg, soya protein 6 kg, spicery 0.2 kg, cooking wine 1 kg, mixing them uniformly, filling the mixture into animal casing under vacuum, drying, and then steaming or cooking and then smoking at low temperature to obtain the roasted fish sausage according to the invention.

### Example 2

Selecting processed pomfret meat 70kg and Todarodes pacificus (squid) 30kg, cutting into block having length of 2-100mm, adding salt 2.7kg, sugar 2kg, soya protein 6 kg, spicery 0.2 kg, cooking wine 1 kg, mixing them uniformly, filling the mixture into animal casing under vacuum, drying, and then low-temperature steaming or cooking and then smoking at low temperature to obtain the roasted fish sausage according to the invention.

### Example 3

Selecting processed hairtail meat 92kg and cuttlefish 8 kg, cutting into block having length of 2-100mm, adding salt 2.7kg, sugar 2kg, soya protein 6 kg, spicery 0.2 kg, cooking wine 1 kg, mixing them uniformly, filling the mixture into animal casing under vacuum, drying, and then steaming or cooking and then smoking at low temperature to obtain the roasted fish sausage according to the invention.

### Example 4 (comparative example)

Selecting processed yellow croaker (yellow-tin tuna) meat 50kg, cutting into block having length of 1-90mm, and Octopus variabilis meat block 50 kg, adding soya sauce 4kg, salt 3.5kg, sugar 2.5kg, cooking wine 1.5kg, spicery 0.5 kg, mixing them uniformly, filling the mixture into animal casing, drying by airing in shady and cool place for 5-20 days, and then steaming or cooking adequately at low-temperature to obtain the Chinese-style pure fish sausage.

### Example 5 (comparative example)

Selecting processed yellow croaker (yellow-tin tuna) meat 5kg, cutting into block having length of 1-90mm, and Todarodes pacificus (squid) meat block 95kg, adding soy sauce 4kg, salt 3.5kg, sugar 2.5kg, cooking wine 1.5 kg, spicery 0.5 kg, mixing them uniformly, filling the mixture into animal casing, drying by airing in shady and cool place for 5-20 days, and then steaming or cooking adequately at low-temperature to obtain the Chinese-style pure fish sausage.

It can be seen from aforesaid examples that the sausage of the present invention includes sausage, roasted sausage, smoked sausage and hot dog sausage.

### Practical applicability

The present invention combines the advantages of good taste, high nutritive value the aquatic product possessed with the advantages of easy to preserve and carry, convenience for eating and unique in taste the conventional sausage possessed, and provides a kind of new convenience food. Furthermore, the product of the present invention is convenient for eating, and is helpful to people's health because of its high nutritive value.

## Claims

1. Pure aquatic animal meat sausage with fish, comprising minced cephalopod aquatic animal meat, fish and subsidiary materials, **characterized in that** the minced cephalopod aquatic animal meat is in a quantity of 8-95% of the total weight, and the fish is in the form of blocks, strips or slices with a length of 2-100mm, a thickness of 2-40mm and a width of 2-100mm.

2. Pure aquatic animal meat sausage with fish according to claim 1, wherein the said fish is raw, ready-cooked, smoked and /or dried product.

3. Pure aquatic animal meat sausage with fish according to claim 2, wherein the said cephalopod aquatic animal meat is 25-60% of the total weight.

4. Pure aquatic animal meat sausage with fish according to claim 3, wherein the said cephalopod aquatic animal meat is 30-50% of the total weight.

5. Pure aquatic animal meat sausage with fish according to claim 4, wherein the said cephalopod aquatic animal includes Todarodes pacificus, Sepia esculenta, Loligo japonica, Sepiella maindroni, Doryteuthis bleekeri, Sepioteuthis lessoniana, Octopus variabilis, Octopus ochellatus, Octopus vulgaris, and mixtures thereof.

## Patentansprüche

1. Wurst aus rein aquatischem Tierfleisch mit Fisch, enthaltend gehacktes Fleisch von aquatischen Cephalopoden, Fisch und Hilfsstoffe, **dadurch gekennzeichnet, daß** das gehackte Fleisch von aquatischen Cephalopoden in einer Menge von 8 - 95% des Gesamtgewichts vorhanden ist und der Fisch die Form von Blöcken, Streifen oder Scheiben mit einer Länge von 2-100 mm, einer Dicke von 2-40 mm und einer Breite von 2-100 mm hat.

2. Wurst nach Anspruch 1, bei der der Fisch roh, gargekocht, geräuchert und/oder getrocknet ist.

3. Wurst nach Anspruch 2, bei der das Cephalopodenfleisch 25 - 60% des Gesamtgewichts beträgt.

4. Wurst nach Anspruch 3 bei der das Cephalopodenfleisch 30 - 50% des Gesamtgewichts beträgt.

5. Wurst nach Anspruch 4, bei der das Cephalopodenfleisch Todarodes pacificus, Sepia esculenta. Loligo japonica, Sepiella maindroni, Doryteuthis bleekeri, Sepioteuthis lessoniana, Octopus variabilis, Octopus ochellatus, Octopus vulgaris und Gemische hieraus umfaßt.

## Revendications

1. Saucisse de viande d'animaux purement aquatiques avec du poisson, comprenant de la viande hachée d'animal aquatique de type céphalopode, du poisson et des matières supplémentaires, **caractérisée en ce que** la viande hachée d'animal aquatique de type céphalopode est en une quantité de 8 à 95 % du poids total, et le poisson se trouve sous la forme de blocs, de bandes ou de tranches ayant une longueur de 2 à 100 mm, une épaisseur de 2 à 40 mm et une largeur de 2 à 100 mm.

2. Saucisse de viande d'animaux purement aquatiques avec du poisson selon la revendication 1, dans laquelle ledit poisson est un produit cru, cuisiné, fumé et/ou séché.

3. Saucisse de viande d'animaux purement aquatiques avec du poisson selon la revendication 2, dans laquelle ladite viande d'animal aquatique de type céphalopode constitue de 25 à 60 % du poids total.

4. Saucisse de viande d'animaux purement aquatiques avec du poisson selon la revendication 3, dans laquelle ladite viande d'animal aquatique de type céphalopode constitue de 30 à 50 % du poids total.

5. Saucisse de viande d'animaux purement aquatiques avec du poisson selon la revendication 4, dans laquelle ledit animal aquatique de type céphalopode comprend Todarodes pacificus, Sepia esculenta, Loligo japonica, Sepiella maindroni, Doryteuthis bleekeri, Sepioteuthis lessoniana, Octopus variabilis, Octopus ochellatus, Octopus vulgaris et des mélanges de ceux-ci.
